Europäisches Patentamt

European Patent Office

Office européen des brevets

(11) Numéro de publication: **0 301 937**
**B1**

(12) **FASCICULE DE BREVET EUROPEEN**

(45) Date de publication du fascicule du brevet:
**22.11.90**

(51) Int. Cl.⁵: **F16T 1/14,** F16K 15/14

(21) Numéro de dépôt: **88401811.0**

(22) Date de dépôt: **12.07.88**

(54) **Dispositif de purge automatique à membrane pour circuits pneumatiques.**

(30) Priorité: **28.07.87 FR 8710679**

(43) Date de publication de la demande:
**01.02.89 Bulletin 89/5**

(45) Mention de la délivrance du brevet:
**22.11.90 Bulletin 90/47**

(84) Etats contractants désignés:
**CH DE ES GB IT LI**

(56) Documents cités:
**FR-A- 1 268 227**
**FR-A- 1 408 859**
**FR-A- 2 220 741**
**US-A- 2 793 649**
**US-A- 3 084 707**

(73) Titulaire: **ABX , Société Anonyme dite, Zone Industrielle du Prunay 173 rue Benoît Frachon,
F-78500 Sartrouville(FR)**

(72) Inventeur: **Champseix, Serge, 29 bis rue des Puiseux,
F-78130 Les Mureaux(FR)**

(74) Mandataire: **Lepeudry-Gautherat, Thérèse et al,
ARMENGAUD JEUNE CABINET LEPEUDRY 6, rue du Faubourg Saint Honoré, F-75008 Paris(FR)**

## Description

L'invention qui a pour objet un dispositif de purge automatique pour circuits pneumatiques concerne plus particulièrement un dispositif à membrane destiné à remplacer avantageusement les systèmes à clapet, et trouve une application préférentielle aux circuits d'alimentation en air comprimé d'appareils automatiques d'analyses médicales.

Les circuits d'air comprimé qui alimentent des appareils comportant par exemple des vannes pneumatiques disposent de façon habituelle de filtres destinés à bloquer les impuretés qui risqueraient de perturber le fonctionnement et l'étanchéité des vannes. Chaque circuit d'alimentation est également pourvu d'un bocal dans lequel pénètre l'air avant de traverser le filtre et d'atteindre les vannes, lequel bocal permet la condensation de la vapeur d'eau dont est chargé l'air comprimé. Il est en effet souhaitable d'éliminer cette vapeur d'eau qui est une source d'oxydation des organes mécaniques rencontrés. L'eau condensée est recueillie par le bocal et doit être évacuée soit de façon continue soit épisodiquement.

On connaît des dispositifs manuels de purge qui consiste en un simple clapet obturateur placé à la base du bocal et manoeuvré par un bouton poussoir à l'encontre de la force de rappel d'un ressort. Il faut évidemment les manoeuvrer chaque fois que cela est nécessaire et cela impose de la part de l'utilisateur une surveillance fréquente qui est donc une sertitude, c'est pourquoi cette solution manuelle est remplacée le plus fréquemment par un dispositif de purge automatique. Il existe un système qui consiste à prévoir dans ce bocal un petit orifice de fuite calibrée et constante, par lequel l'eau s'échappe continuellement. Mais l'orifice crée aussi une fuite d'air qui peut paraître négligeable pour des pressions d'air comprimé importantes mais qui est inadmissible en cas de plus faibles pressions. On préfère utiliser alors un dispositif à soupape rappelée en position ouverte par un ressort et qui se ferme lorsque la pression d'air s'établit dans le bocal. Dès que l'alimentation en air comprimé est interrompue, la soupape se rouvre et l'eau du bocal peut s'écouler. Cette disposition met en jeu des pièces mécaniques essentiellement métalliques qui peuvent aussi s'oxyder et devenir rapidement défectueuses. D'autre part si la fermeture de la soupape s'effectue correctement à des pressions élevées, elle est beaucoup plus aléatoire pour des faibles pressions.

On connaît encore un système de purge automatique qui met en ouvre un clapet monté sur une tige, coulissant dans le bocal, et séparant deux chambres, dont une chambre inférieure communique avec l'extérieur et une chambre supérieure récupère l'eau condensée et la libère vers la chambre inférieure quand une certaine pression est établie au dessus du clapet. Ce système ne donne pas non plus toute satisfaction car il est difficile à mettre en oeuvre et à régler. Un autre dispositif de purge et qui comprend les caractéristiques du préambule de la revendication 1 est connu de FR-A 1 408 859.

Afin de s'affranchir des inconvénients énoncés ci-dessus, un but de la présente invention est donc de fournir un dispositif qui fonctionne de façon rigoureuse, qui soit de mise en oeuvre facile, d'un prix de revient peu élevé et qui s'adapte très aisément à un bocal de purge, connu en soi, habituellement utilisé sur de nombreux appareils et plus précisément sur ceux ayant un circuit pneumatique d'alimentation en air comprimé à relativement basse pression.

A cet effet un objet de l'invention consiste donc en un dispositif de purge automatique pour circuits pneumatiques, comportant un mécanisme mobile assurant la purge de l'eau d'un bocal destiné à recueillir l'eau condensée provenant de l'air comprimé admis dans le circuit, lequel mécanisme permettant d'évacuer épisodiquement l'eau du bocal par une ouverture inférieure, lors d'un changement des conditions de pression d'air établies dans ledit bocal, dispositif selon lequel le mécanisme mobile est une membrane souple qui sépare l'ouverture du bocal d'un conduit de purge, qui est précambrée en position haute contre ladite ouverture et contre une face d'appui l'entourant et qui est munie d'un orifice excentré et coiffé par la face d'appui, dispositif selon lequel également la membrane se déplace entre cette position haute et une position basse ou elle obture le conduit de purge, l'orifice excentré étant découvert durant le passage de la membrane de l'une à l'autre de ces deux positions .

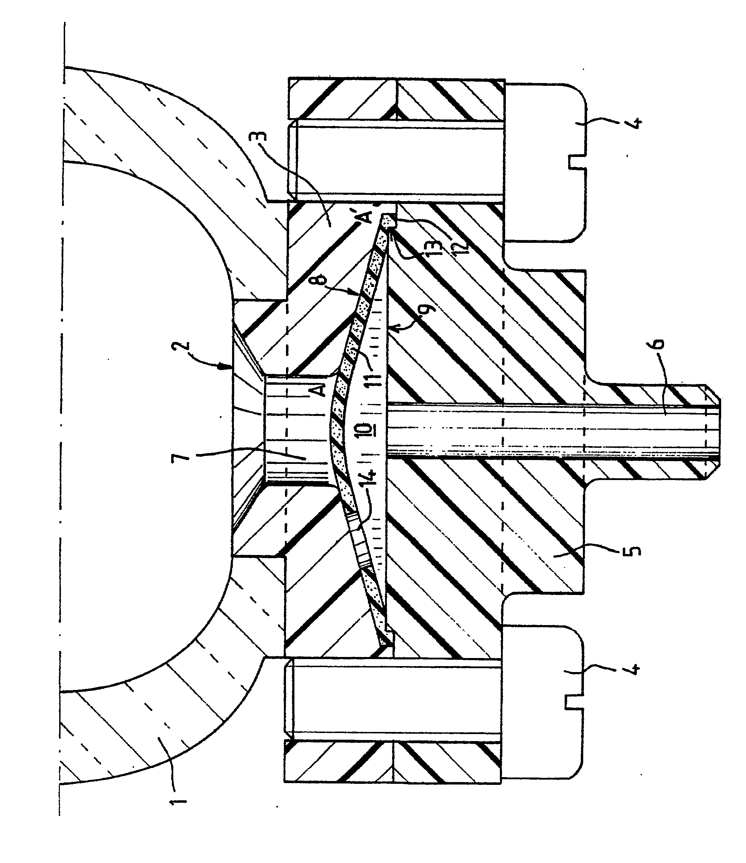

D'autres caractéristiques particulières ressortiront de la description qui va suivre faisant référence au dessin annexé qui représente une vue en coupe d'un exemple non limitatif de réalisation du dispositif de purge. On a représenté sur le dessin le fond d'un bocal de purge 1 muni d'un orifice d'évacuation 2. Sur ce fond est collé une embase 3 reliée par un jeu de vis 4 à un embout d'évacuation 5 traversé par un conduit de purge 6. L'embase 3 s'adapte à l'orifice 2 et possède également une ouverture 7 cylindrique et coaxiale à cet orifice 2, qui, a mi-épaisseur de l'embase, s'évase latéralement pour former une calotte 8 dont la face supérieure AA′ est faiblement inclinée sur l'horizontale. Entre la face supérieure horizontale 9 de l'embout 5 et la calotte, est délimitée une chambre 10 intermédiaire entre l'orifice 2 et le conduit de purge 6.

Une membrane souple 11 est pincée entre l'embase 3 et l'embout 5 par son rebord annulaire 12 qui se place entre un épaulement 13 prévu sur la face supérieure 9 de l'embout et le bord A de la calotte 8. Le diamètre de la membrane est légèrement supérieur à celui pris sur le bord de la calotte. Ainsi, au montage, la membrane subit une légère contrainte qui la cambre vers le haut et l'applique contre la paroi AA′ de la calotte. L'étanchéité est assurée à ce niveau au serrage de l'embout contre l'embase par les vis 4. La membrane est munie, dans une zone latérale écartée de l'ouverture 7 d'un petit orifice 14.

Le dessin représente la membrane en position haute occupant une position cambrée pour laquelle sa conformation naturelle la maintient en appui contre la calotte 9, l'orifice 14 étant obturé par la partie AA′ de celle-ci et l'ouverture 7 par la membrane elle-même. L'eau éventuellement contenue dans le bocal 1 ne peut donc s'écouler, son poids étant insuffisant pour infléchir la membrane.

Dès que l'appareil est mis en fonctionnement et qu'une pression d'air s'établit dans le bocal, la membrane est repoussée vers le bas écartant l'orifice 14 de la calotte. L'eau peut s'écouler par le conduit 6, l'écoulement étant favorisé par la surpression d'air. A la fin de son mouvement de descente la membrane s'applique sur la face supérieure horizontale 9 de l'embout 5 et obture le conduit de purge 6. Pendant le fonctionnement l'eau s'accumule à nouveau au-dessus de la membrane. Mais dès l'interruption de la pression d'air comprimé, la membrane revient à sa position première du fait de son élasticité et de sa précontrainte. Pendant ce mouvement ascendant l'orifice 14 est à nouveau découvert, et une purge d'eau complémentaire est assurée.

Le dispositif de purge avantageusement réalisé en matériaux susceptibles de résister aux fluides agressifs, ne met en oeuvre comme organe mobile qu'une petite membrane de faible dimension ; il convient particulièrement aux appareils utilisant des pressions d'air comprimé relativement faibles tels que les matériels d'analyse médicale.

## Revendications

1.- Dispositif de purge automatique pour circuits pneumatiques, comportant un mécanisme mobile utilisant une membrane souple précambrée contre une face d'appui pour assurer la purge de l'eau d'un bocal destiné à recueillir l'eau condensée provenant de l'air comprimé admis dans le circuit, lequel mécanisme permettant d'évacuer épisodiquement l'eau du bocal par une ouverture inférieure lors d'un changement des conditions de pression d'air établies dans ledit bocal, caractérisé en ce que ladite membrane souple (11) qui sépare l'ouverture (2) du bocal d'un conduit de purge (6) est précambrée en position haute contre ladite ouverture, en ce qu'elle est munie d'un orifice (14) excentré et coiffé par la face d'appui (8) entourant l'ouverture, en ce que la membrane se déplace entre cette position haute de repos et une position basse où elle obture le conduit de purge, et en ce que l'orifice (14) est découvert durant le passage de la membrane de l'une à l'autre de ces deux positions.

2.- Dispositif de purge selon la revendication 1, caractérisé en ce que la membrane (11) est pincée, entre une embase (3) rapportée sur le fond du bocal (1) et qui possède une ouverture (7) coaxiale à l'ouverture (2) du bocal, et un embout d'évacuation (5) traversé par un conduit de purge (6).

3.- Dispositif de purge selon les revendications 1 et 2, caractérisé en ce que l'ouverture (7) de l'embase (3) s'évase latéralement pour former une calotte (8) dont la face supérieure AA' est faiblement inclinée sur l'horizontale et constitue la face d'appui de la membrane (11).

4.- Dispositif de purge selon la revendication 2, caractérisé en ce qu'un rebord annulaire (12) de la membrane souple (11) se place entre un épaulement (13) prévu sur la face supérieure (9) de l'embout et le bord A de la calotte.

5.- Dispositif de purge selon les revendications 1 et 2, caractérisé en ce que la membrane (11) est précambrée par le fait que son diamètre avant montage est légèrement supérieur au diamètre de la calotte (8).

6.- Dispositif de purge selon les revendications 1 et 2, caractérisé en ce que l'étanchéité est assurée au niveau des bords de la membrane (11) par le serrage de l'embout (5) contre l'embase (3) à l'aide des vis (4).

## Patentansprüche

1. Einrichtung zur automatischen Entwässerung für Pneumatik-Kreisläufe, die eine bewegbare Vorrichtung mit einer biegsamen, gegen eine Anlagefläche vorwölbbaren Membran umfaßt, mit deren Hilfe die Abscheidung des in der im Kreislauf befindlichen Preßluft vorhandenen Wassers aus einem Kondenswasser-Sammelgefäß erreichbar ist, wobei die Vorrichtung die gelegentliche Abscheidung des Wassers aus dem Sammelgefäß durch dessen untere Öffnung ermöglichen soll, sobald sich die Druckverhältnisse der im Sammelgefäß befindlichen Druckluft ändern, dadurch gekennzeichnet, daß die biegsame Membran (11), welche die untere Öffnung (2) des Sammelgefäßes (1) von einer Abscheide-Leitung (6) trennt, in ihrer oberen Lage gegen die besagte Öffnung vorgewölbt ist, daß die Membran mit einem außermittig angeordneten Öffnungsloch (14) versehen ist, welches durch die die untere Öffnung umgebende Anlagefläche (8) abgedeckt werden kann, daß die Membran zwischen der genannten, oberen Ruhelage und einer unteren Lage bewegbar ist, in der sie die Abscheide-Leitung verschließen kann und daß das Öffnungsloch der Membran während ihres Überganges aus der einen in die andere der genannten beiden Lagen aufgedeckt ist.

2. Entwässerungs-Einrichtung nach Anspruch 1, dadurch gekennzeichnet, daß die Membran (11) zwischen einer am Boden des Sammelgefäßes (1) angebrachten Fußplatte (3), welche eine mit der unteren Öffnung (2) des Sammelgefäßes koaxiale Öffnung (7) aufweist, und einem von der Abscheide-Leitung (6) durchdrungenen Abscheideflansch (5) eingeklemmt ist.

3. Entwässerungs-Einrichtung nach den Ansprüchen 1 und 2, dadurch gekennzeichnet, daß die Öffnung (7) der Fußplatte (3) sich unter Bildung einer Wölbung (8) seitlich erweitert, wobei deren Oberfläche (AA') gegen die Horizontale schwach geneigt ist und die Anlagefläche für die Membran (11) bildet.

4. Entwässerungs-Einrichtung nach Anspruch 2, dadurch gekennzeichnet, daß eine ringförmige Einfassung (12) zwischen einem Absatz (13) an der Oberfläche (9) des Abscheideflansches (5) und dem Rand (A) der Wölbung (8) gelegen an der Membran (11) vorgesehen ist.

5. Entwässerungs-Einrichtung nach den Ansprüchen 1 und 2, dadurch gekennzeichnet, daß die Membran (11) dadurch vorgewölbt ist, daß ihr Durchmesser vor der Montage etwas größer als der Durchmesser der Wölbung (8) ist.

6. Entwässerungs-Einrichtung nach den Ansprüchen 1 und 2, dadurch gekennzeichnet, daß die Dichtheit der bewegbaren Vorrichtung auf der Höhe der Umrandung (12) der Membran (11) durch eine Preßverbindung des Flanches (5) mit der Fußplatte (3) mittels Schrauben (4) gesichert ist.

## Claims

1. Automatic draining apparatus for pneumatic circuits, comprising a mobile mechanism using a flexible diaphragm pre-arched against a supporting face to effect the draining of water from a jar intended to collect water of condensation coming from the compressed air admitted into the circuit, the said mechanism allowing the water to be discharged intermittently from the jar by way of a lower aperture when there is a change in the air pressure conditions established in the said jar, characterised in that the said flexible diaphragm (11) which separates the aperture (2) of the jar from a draining conduit (6) is pre-arched into an upper position against the said aperture, in that it is provided with an eccentric orifice (14) covered by the supporting face (8) surrounding the aperture, in that the diaphragm is displaced between this upper rest position and a lower position wherein it closes the draining conduit, and in that the orifice (14) is uncovered during the passage of the diaphragm from the one to the other of these two positions.

2. Draining apparatus according to claim 1, characterised in that the diaphragm (11) is gripped between a base (3) arranged on the bottom of the jar (1) and having an aperture (7) coaxial with the aperture (2) of the jar, and a discharge nose (5) through which a draining conduit (6) extends.

3. Draining apparatus according to claims 1 and 2, characterised in that the aperture (7) of the base (3) flares laterally to form a dish (8) whose upper face AA' is slightly inclined relatively to the horizontal and constitutes the face for supporting the diaphragm (11).

4. Draining apparatus according to claim 2, characterised in that an annular flange (12) of the flexible diaphragm (11) is arranged between a shoulder (13) provided on the upper face (9) of the nose and the edge A of the dish.

5. Draining apparatus according to claims 1 and 2, characterised in that the diaphragm (11) is pre-arched due to the fact that its diameter before assembly is slightly greater than the diameter of the dish (8).

6. Draining apparatus according to claims 1 and 2, characterised in that sealing-tightness is ensured at the level of the edges of the diaphragm (11) by the clamping of the nose (5) against the base (3) by means of screws (4).